Europäisches Patentamt

European Patent Office

Office européen des brevets

(19)

(11) Numéro de publication: **0 340 110**
**A1**

(12) **DEMANDE DE BREVET EUROPEEN**

(21) Numéro de dépôt: 89401192.3

(22) Date de dépôt: 26.04.89

(51) Int. Cl.⁴: **F 16 L 21/04**

(30) Priorité: 26.04.88 FR 8805508

(43) Date de publication de la demande:
02.11.89 Bulletin 89/44

(84) Etats contractants désignés:
BE DE ES GB GR IT LU NL

(71) Demandeur: **ETABLISSEMENTS TROUVAY & CAUVIN**
**Société Anonyme**
**58, rue Général Chanzy**
**F-76097 Le Havre Cédex (FR)**

(72) Inventeur: **Jourdain, Maxime**
**20, Avenue René Deshayes**
**F-76610 Le Havre (FR)**

(74) Mandataire: **Rodhain, Claude et al**
**Cabinet Claude Rodhain 30, rue la Boétie**
**F-75008 Paris (FR)**

(54) Dispositif de raccordement pour tuyauteries en matière plastique.

(57) L'invention concerne un dispositif de raccordement pour tuyauteries, notamment en matière plastique, comportant, autour d'au moins une canalisation (1), un manchon (3), un joint d'étanchéité (6) et une bride (4).

Selon l'invention, le manchon (3) comporte en partant de l'extrémité libre de la canalisation (1), une partie cylindrique (31) et un logement pour le joint ; la bride comporte un corps (41) adapté à s'ajuster dans le logement où le joint (6) est comprimé entre le manchon (3), la canalisation (1) et la bride (4) ; cette bride (4) est en plusieurs pièces (4A, 4B) sous la forme de segments de couronne circulaire comportant intérieurement au moins une paire de griffes (44) s'étendant circonférentiellement sur une partie du pourtour de la canalisation (1) ; à chaque segment (4A, 4B) de la bride (4), sont associés des moyens de fixation (6) à une autre bride et de compression du joint (6), et des moyens de fixation (7, 8, 9) des segments de bride entre eux et de serrage des griffes contre la canalisation.

FIG. 1

## Description

### Dispositif de raccordement pour tuyauteries en matière plastique

L'invention concerne un dispositif de raccordement à blocage extérieur pour tuyauteries et notamment pour canalisations en polyéthylène haute densité et en chlorure de polyvinyle, à compression de joint.

Dans le passé, les canalisations en polyéthylène haute densité et en chlorure de polyvinyle étaient raccordées par des techniques qui leur étaient spécifiques.

Ainsi, les canalisations en polyéthylène haute densité étaient thermosoudées, et celles en chlorure de polyvinyle étaient collées, ou reliées par des raccords à joints en caoutchouc. Outre le fait que ces modes de raccordement rendaient délicates les éventuelles opérations ultérieures de séparation, ils nécessitaient de la part des monteurs et dépanneurs une certaine habitude dans des techniques variées.

On a donc cherché à raccorder les canalisations des deux types au moyen d'un type unique de dispositif de raccordement, par exemple comportant deux brides (plus spécifiquement une bride et une contre-bride que l'on désignera dans la suite toutes deux par le mot "bride" par souci de simplification) se faisant face et disposées chacune à proximité de l'une des extrémités des canalisations à raccorder, un manchon entretoise entre les deux brides et entourant ces deux extrémités, deux bagues et deux joints respectifs calés entre bride et manchon, et des boulons longitudinaux coopérant avec des écrous pour exercer un effort de rapprochement sur les brides ; dans ces conditions, le serrage du raccord provoque une déformation des canalisations et l'on est obligé de loger un insert à l'intérieur de celles-ci ; de plus, lorsque le fluide sous pression parcourt les canalisations, sous la pression, s'exerce une force d'étirement sur les boulons, ce qui entraîne le recul des bagues et une décompression des joints, et en conséquence des risques importants de perte d'étanchéité.

L'invention a pour but de remédier à ces inconvénients et également de créer un dispositif de raccordement qui soit non seulement fiable mais également de conception simple, de faible coût, facile à installer lors de dépannages à la place de dispositifs existants, et plus précisément un dispositif évitant le déboitement des raccords assurant la liaison étanche de tubes en polyéthylène haute densité et en chlorure de polyvinyle entre eux ou sur un accessoire à bride, malgré le fait que compte tenu de l'effet de fond dû à la pression hydrostatique, les tuyauteries ont tendance à sortir des raccords (en particulier pour le polyéthylène haute densité, à cause de ses propriétés anti-adhésives propres et antifriction), et que, de plus, à cause d'une autre caractéristique du polyéthylène haute densité et du chlorure de polyvinyle qui est leur coefficient de dilatation, les variations de température entraînent sur les canalisations enterrées ou aériennes, des variations de longueur, d'où en cas de refroidissement par rapport aux conditions initiales de pose, une contraction des canalisations et par conséquent une traction au niveau des raccords ou joints, et également un risque de déboitement.

A cet effet, l'invention concerne un dispositif de raccordement pour tuyauteries, notamment en matière plastique, du type comportant, autour d'une canalisation à raccorder à une autre canalisation ou à un autre dispositif, un manchon, et au moins un joint d'étanchéité et une bride, caractérisé en ce que le manchon comporte intérieurement autour de la région de l'extrémité libre de la canalisation à raccorder et en partant de cette extrémité libre, une partie sensiblement cylindrique, et un logement pour le joint d'étanchéité, la bride comporte un corps adapté à s'ajuster dans le logement, et le joint est comprimé dans ledit logement entre le manchon, la périphérie de la canalisation, et la bride, en ce que ladite bride est en plusieurs pièces sous la forme de segments de couronne circulaire comportant intérieurement au moins une paire de griffes s'étendant circonférentiellement sur seulement une partie du pourtour de la canalisation, et en ce qu'à chaque segment de bride sont associés des moyens de fixation à une autre bride et de compression du joint, et des moyens de fixation des segments de bride entre eux et de serrage des griffes contre la canalisation.

Ainsi, dans le dispositif selon l'invention, on dissocie deux fonctions habituellement associées, à savoir la fonction "étanchéité" et la fonction "fixation"; à cette dissociation, correspond un montage simple du dispositif de raccordement, puisque ce montage s'effectue en rapprochant des brides l'une de l'autre, puis en les serrant sur le joint ; contrairement à la plupart des dispositifs de la technique antérieure, en fonctionnement, la pression interne s'exerçant sur les canalisations augmente la pénétration des griffes dans la partie extérieure de celles-ci.

D'autres caractéristiques et avantages de l'invention ressortiront da la description qui va suivre se rapportant à une forme de réalisation préférentielle donnée à titre d'exemple non limitatif et représentée sur les dessins ci-joints dans lesquels :

- la figure 1 montre les différentes pièces constituant un dispositif selon l'invention, au moyen d'une demi-vue extérieure (en bas) et d'une demi-coupe (en haut),

- la figure 2 montre, de face, un segment de l'une des brides équipant le dispositif représenté sur la figure 1.

Le dispositif de raccordement représenté sur les dessins est destiné au raccordement des extrémités de deux canalisations 1, 2 et est à cet effet du type comportant un manchon entretoise 3 de forme générale cylindrique à section droite circulaire enfilé autour des deux régions d'extrémité de telle sorte que la zone constituant la solution de continuité de la tuyauterie formée par les deux canalisations soit disposée sensiblement à mi-longueur du manchon 3 (quoique cette configuration ne soit pas obligatoire), deux brides 4 positionnées aux extrémités respectives du manchon 3, des tirants 5 reliant les deux brides 4 sensiblement parallèlement à l'axe longitudinal du cylindre à section droite circulaire du manchon, et deux joints 6 déformables élastiquement chacun par compression entre le manchon 3, l'une des deux brides 4, et la région d'extrémité de la canalisation 1, 2 correspondante.

Selon l'invention, le manchon entretoise 3 comporte intérieurement une partie centrale 31 cylindrique dont le diamètre est supérieur au diamètre extérieur des canalisations à raccorder, et deux parties d'extrémité 32 très légèrement tronconiques dont le diamètre augment en allant vers l'extrémité correspondante, de plus grand diamètre , reliées chacune à la partie centrale par une partie intermédiaire 33 nettement tronconique dans le même sens; l'épaisseur du manchon 3 peut être à peu près constante sur toute sa longueur, et la partie centrale 31 extérieurement rigidifiée par des nervures longitudinales reliant les deux parties d'extrémité 32 et réparties régulièrement à sa périphérie.

Les brides 4 sont constituées d'un corps 41 ayant extérieurement une forme générale très légèrement tronconique à section droite circulaire de même conicité que les parties d'extrémité 32 du manchon, disposé du côté de l'extrémité de la canalisation qu'elles entourent, et d'une embase de fixation 42 à l'opposé ; le diamètre extérieur du corps 4 est, dans sa partie destinée à pénétrer dans le manchon, très légèrement inférieur au diamètre intérieur de la partie d'extrémité du manchon, sur une longueur suffisante pour ne pas créer contre celui-ci une butée limitant la compression du joint 6 enfilé autour de la canalisation 1, 2 entre celle-ci, les parties tronconiques 32, 33 du manchon 3 et l'extrémité libre du corps 41 de la bride 4 insérée dans la partie d'extrémité 32 de ce manchon ; l'embase 42 comporte des trous destinés au passage des tirants, vis, boulons, gougeons et analogues qui servent à la fixation des brides l'une à l'autre et à la mise en compression des joints d'étanchéité.

Les joints 6 sont en matériau élastique, par exemple en élastomère ; ils ont une forme annulaire, et l'anneau présente, au repos, en section selon un plan passant par l'axe longitudinal de la tuyauterie, la forme d'un hexagone irrégulier convexe comportant deux faces 61, 62 parallèles ou très légèrement inclinées (conicité sensiblement égale à celle de la partie d'extrémité 32 du manchon) de longueurs inégales destinées à venir en contact l'une 61 (la plus grande) contre la face extérieure de la paroi de la canalisation 1, 2 et l'autre 62 contre la face intérieure de la paroi de la partie d'extrémité 32 du manchon ; deux autres faces 63, 64 également parallèles entre elles, plus précisément perpendiculaires à la plus grande face 61 précédemment mentionnée, sont adjacentes à celles-ci des faces inclinées 65, 66, qui raccordent ces deux dernières faces parallèles 63, 64 à la plus petite 62 des deux premières faces 61, 62, sont destinées à venir en contact l'une 65 avec une face 43 tronconique de la bride dont le diamètre diminue en allant vers l'intérieur et qui constitue l'extrémité libre du corps 41 de celle-ci, et l'autre 66 avec la face intérieure nettement tronconique de la paroi de la partie intermédiaire 33 du manchon ; la face 65 du joint 6 destinée à venir en contact avec la face 43 de l'extrémité libre de la bride 4 est comme celle-ci inclinée à 60 degrés par rapport à l'axe longitudinal de la tuyauterie, et celle 66 destinée à venir en contact avec la face nettement tronconique du manchon 3 est comme elle inclinée à 30 degrés environ par rapport au même axe. Ce sont ces joints 6 qui assurent l'étanchéité du dispositif de raccordement selon l'invention.

La fixation du raccord sur les canalisations est obtenue par crampage au moyen de griffes 44 prévues sur la face intérieure de la paroi du corps 41 des deux brides 4. Ces griffes 44 sont constituées par des crêtes s'étendant circonférentiellement sur cette face, en proéminence vers l'axe longitudinal de la tuyauterie, et présentant en section par un plan passant par cet axe, une forme en triangle isocèle dont l'angle au sommet (le plus proche de l'axe) est d'environ 45 degrés, valeur qui permet une bonne pénétration de l'arête des griffes 44 ainsi constituées dans les matériaux plastiques. Ces crêtes 44, présentant une hauteur de deux millimètres environ (1,75mm ici), sont réparties par paires; les deux crêtes 44 d'une même paire sont espacées de base à base de cinq millimètres environ; elles sont établies sur une partie de la face interne de la paroi du corps 41 de la bride qui présente un diamètre égal au diamètre extérieur des canalisations 1, 2 augmenté de sa tolérance de fabrication, partie qui est elle-même en proéminence d'environ un millimètre vers l'axe central par rapport à un fond de logement 45, et qui présente une longueur de l'ordre de dix millimètres ; les parties en retrait 45 par rapport aux paires de crêtes 44 servent de logement de dégagement ; dans le cas présent, la face intérieure du corps de bride comporte, entre la face tronconique 43 de l'extrémité libre de celui-ci et l'embase 42, trois paires de crêtes 44 espacées d'environ huit millimètres ; le nombre des paires de crêtes est sensiblement proportionnel au diamètre extérieur des canalisations 1, 2 ; du côté de l'embase 42 de la bride, la face interne débouche à l'extérieur par un congé 46 d'une dizaine de millimètres de rayon.

Extérieurement, le corps 41 et l'embase 42 sont également raccordés par un congé, et à l'extrémité opposée du corps de bride, un chanfrein 47 à quarante cinq degrés facilite la pénétration du corps de bride dans le manchon.

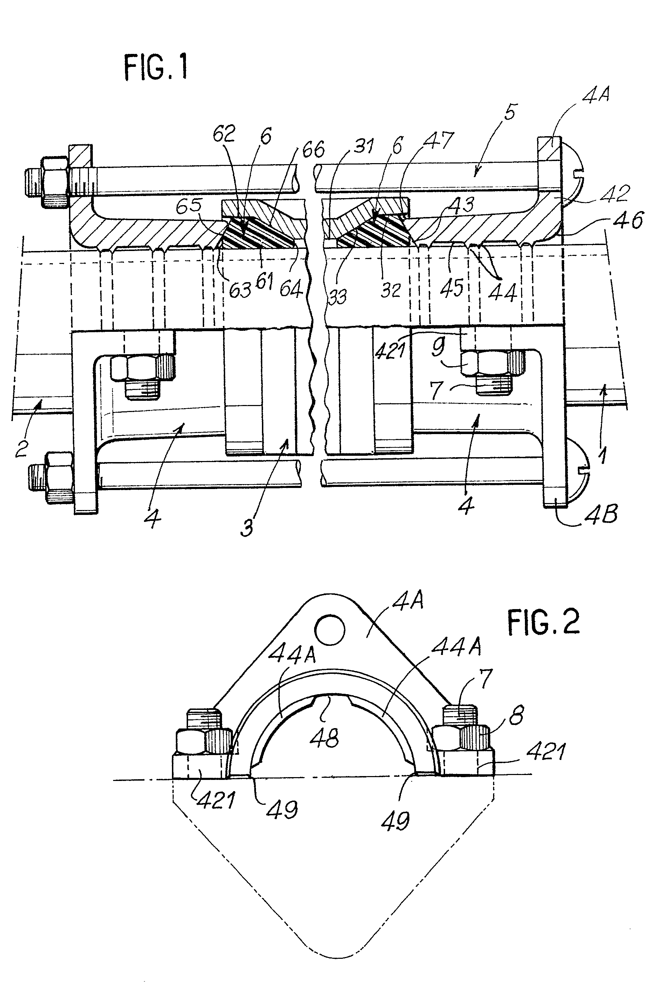

Afin que les brides 4 puissent être disposées autour des canalisations 1, 2 dans le manchon 3, et ensuite fixées sur elles, elles sont réalisées en plusieurs pièces ou segments 4A, 4B de couronne circulaire s'étendant circonférentiellement avec un angle au centre dépendant du nombre de segments 4A, 4B constituant la bride ; dans le cas présent illustré par les dessins, les brides 4 sont constituées de ceux segments 4A, 4B s'étendant chacun sur environ 180 degrés, mais on peut éventuellement en prévoir davantage, surtout dans le cas de canalisations de grand diamètre; les griffes 44 circonférentielles sont elles-mêmes segmentées. Cette configuration permet une bonne répartition du serrage sur la périphérie de la canalisation. Dans le cas présent, chaque demi-bride 4A, 4B comporte une crête 44 en deux segments 44A (figure 2), ce qui évite l'enfoncement de la canalisation et augmente la pression au niveau de chaque griffe 44, chaque segment 44A s'étendant sur un arc de soixante cinq degrés et étant séparé de l'autre par un espace 48 de trente degrés d'arc tandis que de l'autre côté de la griffe 44, un espace 49 s'étendant sur dix degrés d'arc sépare celle-ci du plan de séparation des deux demi-brides 4A, 4B. L'embase 42 de la bride 4 est ici sensiblement carrée (les coins étant cependant arrondis), et la partie d'embase correspondant à chaque demi-bride 4A, 4B a donc sensiblement la forme d'un triangle isocèle rectangle ; le trou de passage des tirants 5 est centré sur le prolongement de l'axe de symétrie de l'espace entre les deux segments 44A de griffe ; de manière générale, il est pratiquement nécessaire de prévoir au moins un trou de passage par segment de bride.

La fixation des segments de bride entre eux est effectuée par boulonnage, des oreilles 421 perpendiculaires à l'embase, prévues sur les parties des segments de bride se faisant vis-à-vis, étant percées de trous de passage pour des boulons ou des tiges filetées 7 dont les têtes ou des écrous 8 de serrage prennent appui sur l'oreille 421 de l'une des brides tandis que l'oreille correspondante de l'autre bride sert d'appui à un écrou 9 coopérant avec cette tige filetée ou ce boulon 7.

De manière générale, chaque griffe 44 s'étend au total sur 260 degrés d'arc ; la naissance de la griffe 44 doit être d'équerre pour offrir une surface minimale ; la hauteur des griffes 44 doit être sensiblement égale à 30% de l'épaisseur de la paroi de la canalisation, et l'état de surface des griffes 44 est important ; la rugosité de cette surface doit être comprise environ entre 1,6 et 6,3 Ra, et, si la répartition longitudinale des griffes 44 est importante pour la bonne tenue de l'accrochage, leur profil l'est également.

Comme on l'a vu, ici les segments de bride sont boulonnés entre eux et enserrent les canalisation 1, 2, mais les brides 4 peuvent être aussi bien de type "pénétrantes" ou "enveloppantes", le principe de base restant de comprimer un volume de matériau élastique tel qu'un élastomère, dans une chambre déterminée par la canalisation, le manchon, et la bride de foulage, à la manière d'un presse-étoupe. La bride et le manchon peuvent être en métal tel que l'acier, la fonte, le laiton, le bronze, l'aluminium, ou analogue.

Le montage du dispositif est très simple :

On commence par marquer la distance entre l'extrémité de la canalisation 1 et la face extérieure de la bride 4 (dimension qui est fonction du diamètre), on présente les segments de bride sur la canalisation 1 et on met en place les boulons de serrage. On bloque ces derniers ; sous la contrainte des boulons, les segments se rapprochent l'un de l'autre tandis que les griffes 44 s'appuyant sur la face extérieure de la paroi de la canalisation 1 pénétrent dans celle-ci ; lorsque les segments de bride sont en contact, le serrage est terminé. Au cours de cette opération, non seulement les griffes 44 ont pénétré dans le matériau en le déformant, mais le diamètre intérieur de la canalisation 1 se réduit temporairement de quelques pourcents.

On complète le montage du dispositif de la manière ordinaire.

Le crampage étant assuré, l'action de la pression interne du fluide, lors de l'utilisation, renforce l'action de la pénétration des griffes 44, de plus en plus au fur et à mesure de l'augmentation de la pression.

On obtient alors une résistance au déboîtement largement supérieure à la valeur de l'effet de fond, résultant de la pression maximale d'épreuve du tube.

Bien entendu, l'invention n'est pas limitée à la forme de réalisation ci-dessus décrite et représentée, et on pourra en prévoir d'autres formes sans sortir de son cadre, notamment, le dispositif de raccordement selon l'invention peut être conçu pour être fixé à une canalisation 1 déjà entourée d'une bride classique et étanchéïfiée vis-à-vis de cette bride; dans ces conditions, le dispositif selon l'invention se limite à un manchon correspondant en quelque sorte à un demi-manchon tel que celui qui a été décrit (avec une partie nettement tronconique 33 et une partie légèrement tronconique 32), un joint d'étanchéité 6, une bride 4 en plusieurs pièces 4A, 4B, ses tirants 6 de fixation, et ses boulons et écrous de serrage et analogues 7, 8, 9.

**Revendications**

1. Dispositif de raccordement pour tuyauteries, notamment en matière plastique, du type comportant, autour d'une canalisation (1) à raccorder à une autre canalisation (1) ou à un autre dispositif, un manchon (3), et au moins un joint d'étanchéité (6) et une bride (4), caractérisé en ce que le manchon (3) comporte intérieurement autour de la région de l'extrémité libre de la canalisation (1) à raccorder et en partant de cette extrémité libre, une partie sensiblement cylindrique (31), et un logement pour le joint d'étanchéité (16), la bride (4) comporte un corps (41) adapté à s'ajuster dans le logement, et le joint (6) est comprimé dans ledit logement entre le manchon (3), la périphérie de la canalisation (1), et la bride (4), en ce que ladite bride (4) est en plusieurs pièces (4A, 4B) sous la forme de segments de couronne circulaire comportant intérieurement au moins une paire de griffes (44) s'étendant circonférentiellement sur seulement une partie du pourtour de la canalisation (1), et en ce qu'à chaque segment (4A, 4B) de bride sont associés des moyens de fixation (6) à une autre bride et de compression du joint, et des moyens de fixation (7, 8, 9) des segments de bride entre eux et de serrage des griffes contre la canalisation.

2. Dispositif selon la revendication 1, caractérisé en ce que ledit logement est constitué, en partant de la partie sensiblement cylindrique (31), par une partie nettement tronconique (33) et une partie légèrement tronconique (32) dont le diamètre augmente en s'éloignant de ladite partie sensiblement cylindrique (31), et en ce que ledit corps (41) de la bride (4) est de même conicité que la partie légèrement tronconique (32) du manchon (3) , est adapté à s'ajuster dans celle-ci sans butée contre elle, et comporte une face d'extrémité libre (43) tronconique, le joint (6) étant inséré dans les parties tronconiques (32, 33) du manchon (3) et comprimé entre ces parties, la périphérie de la canalisation (1), et la face d'extrémité libre (43) tronconique du corps de bride.

3. Dispositif selon l'une quelconque des revendications 1 et 2, caractérisé en ce que le nombre de paires de griffes (44) est proportionnel au diamètre de la canalisation (1).

4. Dispositif selon l'une quelconque des revendications 1 et 2, caractérisé en ce que, entre les deux griffes (44) d'une paire de griffes, le diamètre est très légèrement supérieur au diamètre de la canalisation (1).

5. Dispositif selon l'une quelconque des revendications 1 à 4, caractérisé en ce que deux paires de griffes (44) sont séparées par un logement (45) de dégagement dont le fond est en retrait par rapport au niveau de la base des griffes (44).

6. Dispositif selon l'une quelconque des revendications 1 à 5, caractérisé en ce que les griffes (44) ont un angle au sommet de 45 degrés environ.

7. Dispositif selon, l'une quelconque des revendications 1 à 6, caractérisé en ce que les griffes (44) s'étendent au total sur environ 260 degrés autour de la canalisation (1).

8. Dispositif selon l'une quelconque des revendications 1 à 7, caractérisé en ce que la hauteur des griffes (44) est d'environ 30% de l'épaisseur de la paroi de la canalisation (1).

9. Dispositif selon l'une quelconque des revendications 1 à 8, caractérisé en ce que la surface des griffes (44) présente une rugosité comprise environ entre 1,6 et 6,3 Ra.

10. Dispositif selon l'une quelconque des revendications 1 à 9, caractérisée en ce qu'il comporte, pour relier deux canalisations (1), un manchon (3), et de part et d'autre de ce manchon (3), deux brides (4) en plusieurs parties (4A, 4B) sous la forme de segments de couronne, deux joints (6) insérés dans le manchon (3), et des tirants (6) de fixation des brides (4) l'une à l'autre.

FIG.1

FIG.2

Office européen
des brevets

**RAPPORT DE RECHERCHE EUROPEENNE**

Numero de la demande

EP 89 40 1192

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | GB-A-2 157 785 (PEART AND COMPANY)<br>* page 1, lignes 101-109; revendication 1; figure 1 * | 1 | F 16 L 21/04 |
| A | | 2,6-10 | |
| Y | US-A-1 948 274 (MCMURRAY)<br>* figures 2,3 * | 1 | |
| A | DE-U-7 310 951 (RAUFOSS AMMUNISJONSFABRIKKER)<br>* revendications 1,2; figure 1 * | 1 | |
| A | GB-A-2 146 722 (COUPLING SYSTEMS)<br>* abrégé; figure 1 * | 1,2 | |
| A | US-A-4 603 893 (SABURO TAKAHASHI)<br>* figures 1,3 * | 1,2,10 | |
| A | GB-A-2 167 145 (THE VICTAULIC COMP.)<br>* figure 1 * | 1,2,10 | |
| A | DE-A-2 909 265 (LEVIVIER)<br>* figure 1 * | 1,2,10 | **DOMAINES TECHNIQUES RECHERCHES (Int. Cl.4)** |
| A | US-A-1 984 806 (PFEFFERLE)<br>* figures 1,2 * | 1,2,10 | F 16 L |
| A | US-A-3 992 568 (R.J. AL)<br>* figure 1 * | 1,2,10 | |

Le présent rapport a été établi pour toutes les revendications

| Lieu de la recherche | Date d'achèvement de la recherche | Examinateur |
|---|---|---|
| BERLIN | 07-06-1989 | SCHAEFFLER C.A.A. |

EPO FORM 1503 03.82 (P0402)